(19) Europäisches Patentamt
European Patent Office
Office européen des brevets

(11) EP 1 062 186 B1

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: **99913241.8**

(22) Anmeldetag: **08.03.1999**

(51) Int Cl.[7]: **C04B 41/63**, C08F 20/18

(86) Internationale Anmeldenummer:
**PCT/EP1999/001484**

(87) Internationale Veröffentlichungsnummer:
**WO 1999/046219 (16.09.1999 Gazette 1999/37)**

(54) **VERWENDUNG VON WÄSSRIGEN FILMBILDENDEN ZUBEREITUNGEN AUF DER BASIS VON COPOLYMEREN VON METHACRYLSAUREALKYLESTERN ZUR BESCHICHTUNG VON MINERALISCHEN FORMKÖRPERN**

USE OF AQUEOUS FILM-FORMING PREPARATIONS BASED ON COPOLYMERS OF METHACRYLIC ACID ALKYL ESTERS FOR COATING MINERAL SHAPED BODIES

UTILISATION DE PREPARATIONS FILMOGENES AQUEUSES A BASE DE COPOLYMERES D'ALKYLESTERS D'ACIDE METHACRYLIQUE POUR LE RECOUVREMENT DE MATERIAUX MOULES MINERAUX

(84) Benannte Vertragsstaaten:
**DE FR GB SE**

(30) Priorität: **09.03.1998 DE 19810050**

(43) Veröffentlichungstag der Anmeldung:
**27.12.2000 Patentblatt 2000/52**

(73) Patentinhaber: **BASF AKTIENGESELLSCHAFT**
**67056 Ludwigshafen (DE)**

(72) Erfinder:
- **SCHWARTZ, Manfred**
  **D-67227 Frankenthal (DE)**
- **BECHERT, Bertold**
  **D-67269 Grünstadt (DE)**
- **WIESE, Harm**
  **D-69115 Heidelberg (DE)**
- **HÜMMER, Wolfgang**
  **D-67134 Birkenheide (DE)**
- **RECK, Bernd**
  **D-67269 Grünstadt (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 469 295** **US-A- 3 027 294**

- **DATABASE WPI Section Ch, Week 9437 Derwent Publications Ltd., London, GB; Class A14, AN 94-299917 XP002106502 & JP 06 228367 A (KANEBUCHI KAGAKU KOGYO KK), 16. August 1994**

Bemerkungen:
Die Akte enthält technische Angaben, die nach dem Eingang der Anmeldung eingereicht wurden und die nicht in dieser Patentschrift enthalten sind.



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft die Verwendung von filmbildenden wässrigen Zubereitungen, die wenigstens ein Copolymer P in dispers verteilter Form enthalten, zur Beschichtung von mineralischen Formkörpern.

Unter mineralischen Formkörpern sind hier und im Folgenden Formkörper zu verstehen, die ein mineralisches Bindemittel und mineralische Zuschläge enthalten. Die Zubereitungen aus mineralischem Bindemittel und den Zuschlägen sind in feuchtem Zustand formbar, und verfestigen sich an der Luft oder auch unter Wasser, gegebenenfalls unter Einwirkung erhöhter Temperatur, im Laufe der Zeit steinartig zu dem gewünschten mineralischen Formkörper. Mineralische Bindemittel sind allgemein bekannt. Es handelt sich um feinteilige anorganische Stoffe wie Kalk, Gips, Ton und/oder Zement. Mineralische Zuschläge sind in der Regel körniges oder faserförmiges natürliches oder künstliches Gestein (Kies, Sand, Mineralfasern) mit Korngrößen oder Faserlängen die dem jeweiligen Verwendungszweck in an sich bekannter weise angepasst sind. Daneben enthalten die mineralischen Formkörper in Sonderfällen auch Metalle oder organische Zuschläge. Häufig werden zum Zweck der Farbgebung auch Buntpigmente als Zuschläge mitverwendet.

Beispiele für erfindungsgemäß zu beschichtende mineralische Formkörper sind z. B. Betonröhren, z. B. für Abwasser, Betondachsteine (vgl. z. B. DE-A 39 01 073) oder Randsteine, Treppenstufen, Bodenplatten, Sockelplatten sowie Faserzementplatten, d. h. flächige mineralische Formkörper, die mit anorganischen oder organischen Fasern, z. B. Polyester- oder Nylonfasern, gefüllt sind.

Nachteilig an mineralischen Formkörpern ist, dass sie unter dem Einfluss der Witterung (insbesondere der Einwirkung von Wasser) ihre Festigkeit verlieren, da die kationischen Bestandteile wie $Ca^{2+}$ im Laufe der Zeit herausgelöst werden. Eine weitere nachteilige Eigenschaft mineralischer Formkörper ist das Auftreten von Ausblüherscheinungen. Diese sind vermutlich darauf zurückzuführen, dass die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche unansehnliche weiße Kalkflecken ausbilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil eine wässrige Polymerisatdispersion enthalten. Übliche filmbildende Bestandteile umfassen Styrol/Acrylester-Copolymerisate, Homo- und Copolymerisate des Vinylacetats, Reinacrylate und ähnliche. Durch die Beschichtung erhalten die mineralischen Formkörper ein glänzendes Erscheinungsbild, das für viele Anwendungen, insbesondere bei Betondachsteinen erwünscht ist.

Aus der DE-A-38 27 975 und der DE-A-40 03 909 sind Beschichtungen für Betonsteine auf der Basis wässriger Polymerisatdispersionen, die wenigstens ein aromatisches Keton als Fotosensibilisator enthalten, bekannt. Durch den Fotosensibilisator kommt es zu einer oberflächlichen Vernetzung der Beschichtung. Zwar lassen sich so die unerwünschten Ausblüherscheinungen weitgehend vermindern, jedoch sind die Beschichtungen bei längerer Bewitterung nicht stabil. Ferner sind aus der EP-A 279 069 Klarlacke bekannt, die stark vernetzte Polymere auf der Basis von Methacrylsäurealkylestern enthalten. Derartige Beschichtungen verlieren bei Bewitterung ihren Glanz und werden mit der Zeit spröde.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators und die DE-A-195 14 266 die Verwendung von Polymerisaten, welche spezielle Monomere mit Sulfonatgruppen einpolymerisiert enthalten.

Die Beschichtungen des Standes der Technik haben alle den Nachteil, dass sie bei längerer Bewitterung ihren Glanz verlieren und dass ihre mechanische Festigkeit und ihre Elastizität nachlässt.

Der vorliegenden Erfindung liegt somit die Aufgabe zugrunde, Beschichtungen für mineralische Formkörper bereitzustellen, die für den langfristigen Außeneinsatz geeignet sind und auch über einen langen Zeitraum ihren Glanz und ihre Elastizität nicht verlieren. Ferner sollten die Beschichtungen wirksam ein Ausblühen verhindern und auf den mineralischen Substraten gut haften.

Es wurde überraschenderweise gefunden, dass wässrige zubereitungen, die als filmbildenden Bestandteil weitgehend oder vollständig unvernetzte Copolymere P enthalten, die im wesentlichen aus Alkylestern der Methacrylsäure aufgebaut sind, wobei die Hauptmenge der Monomere von Methylmethacrylat verschieden ist, zu Beschichtungen mit hoher Langzeitstabilität hinsichtlich des Glanzes führen. Zudem weisen die Beschichtungen eine gute Haftung auf mineralischen Substraten auf und gewährleisten einen guten Schutz vor Ausblühungen.

Die vorliegende Erfindung betrifft somit die Verwendung von wässrigen, filmbildenden Zubereitungen, die wenigstens ein Copolymer P als filmbildenden Bestandteil enthalten, das in der Zubereitung in dispers verteilter Form vorliegt und aus ethylenisch ungesättigten Monomeren M aufgebaut ist, wobei die Monomere M

i. 70 bis 99,9 Gew.-% wenigstens eines Esters der Methacrylsäure mit einem $C_1$-$C_{10}$-Alkanol und

ii. 0,1 bis 30 Gew.-% wenigstens eines davon verschiedenen monoethylenisch ungesättigten Monomeren umfassen,

wobei wenigstens 50 Gew.-% der Monomere M von Methacrylsäuremethylester verschieden sind und höchstens 1 Gew.-% der Monomere M zwei oder mehr ethylenisch ungesättigte Doppelbindungen aufweisen, zum Beschichten mineralischer Formkörper.

Beispiele für geeignete Ester der Methacrylsäure mit $C_1$-$C_{10}$-Alkanolen sind z.B. Methyl-, Ethyl-, n-Propyl-, Isopropyl-, n-Butyl-, 2-Butyl-, Isobutyl-, tert.-Butyl-, 1-Methylbutyl-, 2-Methylbutyl-, 3-Methylbutyl-, 1,1-Dimethylbutyl, 2,2-Dimethylbutyl-, n-Pentyl-, 1-Methylpentyl-, 2-Methylpentyl-, 2-Ethylpentyl-, n-Hexyl-, 1-Methylhexyl-, 2-Methylhexyl-, 2-Ethylhexyl, n-Heptyl-, 1-Methylheptyl-, 2-Methylheptyl-, 2-Propylheptyl, n-Octyl-, 1-Methyloctyl-, 2-Methyloctyl- und n-Decylmethacrylat. Bevorzugt sind die Ester der Methacrylsäure mit n-Alkanolen mit 2 bis 6 C-Atomen, d.h. Ethyl, n-Propyl-, n-Butyl-, n-Pentyl- und n-Hexylmethacrylat. Hierunter ist n-Butylmethacrylat besonders bevorzugt.

In den Copolymeren P sind erfindungsgemäß 70,0 bis 99,9 Gew.-%, vorzugsweise 90,0 bis 99,8 Gew.-%, insbesondere 95,0 bis 99,5 Gew.-% und ganz besonders bevorzugt 97,0 bis 99,0 Gew.-% der Monomere M ausgewählt unter den vorgenannten Estern der Methacrylsäure. Dabei sind vorzugsweise wenigstens 80 Gew.-%, insbesondere wenigstens 90 Gew.-% und ganz besonders bevorzugt alle Monomere M von Methylmethacrylat verschieden.

Die Vorteile der erfindungsgemäßen Beschichtungen kommen insbesondere dann zum Tragen, wenn die Copolymere P n-Butylmethacrylat als alleinigen Ester der Methacrylsäure einpolymerisiert enthalten.

Neben den Estern der Methacrylsäure enthalten die Copolymere P 0,1 bis 30 Gew.-%, insbesondere 0,2 bis 10 Gew.-%, ganz besonders bevorzugt 0,5 bis 5 Gew.-% und speziell 1,0 bis 3,0 Gew.-% solche Monomere einpolymerisiert, die von den Methacrylsäurealkylestern verschieden und mit diesen copolymerisierbar sind.

Zu den von den Methacrylsäurealkylestern verschiedenen Monomeren zählen zum einen solche Monomere, die üblicherweise in Beschichtungsmassen auf der Basis wässriger Polymerisatdispersion als Hauptmonomere eingesetzt werden. Beispiel für derartige Monomere, im Folgenden als Monomere MH bezeichnet, sind: vinylaromatische Monomere, wie Styrol, $\alpha$-Methylstyrol, o-Chlorstyrol oder Vinyltoluole, Vinylester von aliphatischen $C_1$-$C_{18}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von $\alpha$-verzweigten, aliphatischen Carbonsäuren mit X C-Atomen, die auch als Versatic® X-Säuren bezeichnet werden) sowie die Ester ethylenisch ungesättigter, von Methacrylsäure verschiedenen, $C_3$-$C_8$-Mono- oder Dicarbonsäuren mit $C_1$-$C_{18}$-, vorzugsweise $C_1$-$C_{12}$- und insbesondere $C_1$-$C_8$-Alkanolen oder $C_5$-$C_8$-Cycloalkanolen, z. B. die Ester der Acrylsäure wie Acrylsäuremethylester, Acrylsäureethylester, Acrylsäure-n-propylester, Acrylsäureisopropylester, Acrylsäure-n-butylester, Acrylsäureisobutylester, Acrylsäure-1-hexylester, Acrylsäure-tert.-butylester, Acrylsäure-2-ethylhexylesxer, sowie ferner die Ester der Fumarsäure und der Maleinsäure wie Fumarsäuredimethylester, Maleinsäuredimethylester oder Maleinsäuredi-n-butylester. Vorzugsweise enthalten die Copolymere P nicht mehr als 20 Gew.-%, insbesondere nicht mehr als 10 Gew.-% und ganz besonders bevorzugt keine Monomere MH einpolymerisiert.

Die Monomere M umfassen häufig Monomere mit einer erhöhten Wasserlöslichkeit, die im folgenden als Monomere MW bezeichnet werden. Unter erhöhter Wasserlöslichkeit versteht man eine Löslichkeit von wenigstens 60 g/l bei 25 °C und 1 bar. Üblicherweise enthalten die Copolymere P 0,1 bis 10 Gew.-%, insbesondere 0,2 bis 5,0 Gew.-% und ganz besonders bevorzugt 0,5 bis 4,0 Gew.-% Monomere MW einpolymerisiert.

Monomere MW umfassen zu einen monoethylenisch ungesättigten Monomere mit einer sauren Funktionalität. Hierzu zählen monoethylenisch ungesättigte $C_3$-$C_8$-Monocarbonsäuren, wie Acrylsäure, Methacrylsäure, Crotonsäure, Vinylessigsäure, Acrylamidoglykolsäure und Methacrylamidoglykolsäure, monoethylenisch ungesättigten $C_4$-$C_8$-Dicarbonsäuren, wie Maleinsäure, Fumarsäure, Itaconsäure und Citraconsäure, deren Halbester mit $C_1$-$C_{12}$-Alkanolen, wie Monomethylmaleinat und Mono-n-butylmaleinat, ethylenisch ungesättigte Sulfonsäuren, wie vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze. Die Monomere MW umfassen ferner auch neutrale Monomere z. B. die Amide ethylenisch ungesättigter Monocarbonsäuren, z. B. Acrylamid und Methacrylamid, die Hydroxyalkylester der vorgenannten ethylenisch ungesättigten Mono- und Dicarbonsäuren, z. B. Hydroxyethylacrylat, Hydroxypropylacrylat, 4-Hydroxybutylacrylat, die entsprechenden Methacrylate und wasserlösliche N-Vinyllactame, z. B. N-Vinylpyrrolidon. Weiterhin kommen Nitrile $\alpha,\beta$-monoethylenisch ungesättigter $C_3$-$C_8$-Carbonsäuren, wie Acrylnitril oder Methacrylnitril als Monomere MW in Betracht. Bevorzugte Monomere MW sind Acrylsäure, Methacrylsäure, Itaconsäure, Citraconsäure, Acrylamid und Methacrylamid.

Eine bevorzugte Ausführungsform der vorliegenden Erfindung betrifft die Verwendung von Copolymeren P, worin die Monomere M 0,1 bis 2,5 Gew.-%, insbesondere 0,5 bis 2,0 Gew.% einer monoethylenisch ungesättigten

Carbonsäure, insbesondere Acrylsäure, Methacrylsäure und Itaconsäure, und 0,1 bis 2,5 Gew.%, insbesondere 0,5 bis 2,0 Gew.% eines der vorgenannten Amide monoethylenisch ungesättigter Carbonsäuren, insbesondere Acrylamid oder Methacrylamid als Monomere MW umfassen.

Die Monomere M umfassen häufig Silicium enthaltende Monomere, vorzugsweise ethylenisch ungesättigte Siloxangruppen enthaltende Monomere, wie sie beispielsweise in der DE-A 195 37 935 genannt sind. Auf den Inhalt dieser Schrift wird in diesem Punkt Bezug genommen. Beispiele für Siloxangruppen enthaltende Monomere sind die Vinyltrialkoxysilane, z.B. Vinyltrimethoxysilan, die Alkylvinyldialkoxysilane oder die (Meth)acryloyloxyalkyltrialkoxysilane, z.E. (Meth)acryloyloxyethyltrimethoxysilan, (Meth)acryloyloxypropyltrimethoxysilan. Die Silicium enthaltenden Monomere führen zu einer verbesserten Haftung des Beschichtungen auf mineralischen Untergründen und können, sofern erwünscht, in Mengen von 0,05 bis 2,0 Gew.-%, vorzugsweise 0,1 bis 1,0 Gew.-%, bezogen auf die Monomere M, verwendet werden.

Erfindungsgemäß sind die Copolymere P weitgehend unvernetzt. Demzufolge umfassen die das Copolymer P konstituierenden Monomere höchstens 1 Gew.-%, vorzugsweise weniger als 0,5 Gew.-%, insbesondere weniger als 0,1 Gew.-% und ganz besonders bevorzugt keine Monomere, die zwei oder mehr ethylenisch ungesättigte Doppelbindungen aufweisen (Monomere MV). Ferner ist es erfindungsgemäß von Vorteil, wenn die Monomere M höchstens 1 Gew.-%, vorzugsweise weniger als 0,5 Gew.-%, insbesondere weniger als 0,1 Gew.-% und ganz besonders bevorzugt keine bifunktionellen Monomere umfassen (Monomere MV'). Bei den Monomeren MV' handelt es sich um ethylenisch ungesättigte Verbindungen, die neben der ethylenisch ungesättigten Doppelbindung wenigstens eine weitere reaktive Gruppe aufweisen, die zu einer Reaktion unter Ausbildung einer Bindung mit einer funktionellen Gruppe im Polymer oder mit einer bi- oder polyfunktionellen Verbindung geeignet ist, beispielsweise eine Epoxy-, N-Alkylol- oder eine Carbonylgruppe. Ganz besonders bevorzugt umfassen die Monomere M keine Monomere MV'.

Üblicherweise weist das Copolymer P eine Glasübergangstemperatur im Bereich von -25 bis +80 °C und vorzugsweise im Bereich von -10 bis +50 °C auf. Hierbei ist zu beachten, dass eine hochwertige Beschichtung nur dann erhalten wird, wenn die wässrige Zubereitung des filmbildenden Copolymers P eine Mindestfilmbildetemperatur unterhalb der Anwendungstemperatur aufweist. Die Mindestfilmbildetemperatur hängt nun ihrerseits von der Glasübergangstemperatur $T_G$ des Copolymeren P ab (siehe Ullmanns Encyclopedia of Industrial Chemistry, 5 ed, Vol. A 21, 1992, S. 169). Grundsätzlich lässt sich die Mindestfilmbildetemperatur dadurch beeinflussen, dass man der wässrigen Zubereitung sogenannte schwerflüchtige, äußere Weichmacher, z. B. Ester der Phthalsäure und/oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für das Copolymer P abzustimmen. So hat sich für die Beschichtung von Betonsteinen eine Glasübergangstemperatur $T_G$ für die Copolymere P oberhalb -10 °C und insbesondere oberhalb +10 °C als vorteilhaft erwiesen. Vorzugsweise wird bei dieser Ausführungsform der Erfindung die Glasübergangstemperatur $T_G$ +50 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +30 °C als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH weinheim 1992, S. 169 sowie Zosel, Farbe und Lack 82 (1976), S. 125-134, siehe auch DIN 53765). Ferner kann die Glasübergangstemperatur auch aus der Messung des E-Moduls im Kriechversuch als Funktion der Temperatur bestimmt werden.

In diesem Zusammenhang erweist es sich als hilfreich, die Glasübergangstemperatur $T_G$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \cdots\cdots \frac{X^n}{T_g^{\,n}}$$

wobei $X^1, X^2, \ldots, X^n$ die Massenbrüche 1, 2, ..., n und $T_g^1, T_g^2, \ldots, T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Die Herstellung der in den erfindungsgemäß zur Anwendung kommenden wässrigen Zubereitungen enthaltenen Copolymere P kann grundsätzlich auf alle denkbaren Arten der radikalischen Copolymerisation ethylenisch ungesättigter Monomere erfolgen, z. B. durch Lösungs-, Fällungs-, Substanz-, Emulsions- oder Suspensionspolymerisation. Bevorzugt wird die radikalische, wässrige Emulsionspolymerisation der vorgenannten Monomere in Gegenwart

wenigstens eines radikalischen Polymerisationsinitiators und gegebenenfalls einer oder mehrerer grenzflächenaktiver Substanzen, da hierbei die Copolymere P in Form einer wässrigen Dispersion erhalten werden. Selbstverständlich sind jedoch auch die anderen Polymerisationsmethoden gangbar. Gegebenenfalls kann es dann erforderlich sein, die Copolymere P nachträglich in eine wässrige Dispersion (Sekundärdispersion) zu überführen.

Erfindungsgemäß enthalten die filmbildenden wässrigen Zubereitungen das Copolymer P in Form einer wässrigen Dispersion. Hierin können die Copolymerteilchen mittlere Teilchengrößen im Bereich von 50 bis 1 000 nm aufweisen. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate oder Wasserstoffperoxid als auch um Azoverbindungen handeln. Bevorzugt werden Redoxinitiatorsysteme verwendet, die aus wenigstens einem organischen Reduktionsmittel und wenigstens einem Peroxid und/oder Hydroperoxid zusammengesetzt sind, z. B. tert.-Butylhydroperoxid mit einer Schwefelverbindung, z. B. dem Natriumsalz der Hydroxymethansulfinsäure, Natriumsulfit, Natriumdisulfit, Natriumthiosulfat oder Acetonbissulfit oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Eisen(II)sulfat. Ebenfalls bevorzugte Initiatoren sind Alkaliperoxodisulfate, wie Natriumperoxodisulfat oder Ammoniumperoxodisulfat. Vorzugsweise beträgt die Menge der eingesetzten radikalischen Initiatorsysteme, bezogen auf die Gesamtmenge der zu polymerisierenden Monomere, 0,05 bis 2 Gew.-%, vorzugsweise 0,1 bis 1 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208. Auch Gemische aus Emulgatoren und/oder Schutzkolloiden können verwendet werden.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie sind vorzugsweise anionischer oder nichtionischer Natur.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Verbindungen der allgemeinen Formel I.

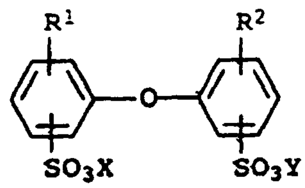

(I)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. Die Verbindungen I sind allgemein bekannt, z. B. aus der EP-A 469 295. Besonders vorteilhaft sind Verbindungen I, in denen X und Y Natrium, $R^1$ ein verzweigter Al-kylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere.

Bevorzugt werden anionische Emulgatoren, insbesondere Emulgatoren der allgemeinen Formel I, oder Kombinationen aus wenigstens zwei anionischen oder wenigstens einem anionischen und einem nichtionischen Emulgator

eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Allylalkohole oder Aldehyde eingestellt werden. Durch geeignete Regler können auch Silicium enthaltende Gruppen in das Copolymer eingeführt werden, z. B. durch Mercaptoalkyltrialkoxysilane wie Mercaptopropyltrimethoxysilan.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Die erfindungsgemäß zur Anwendung kommenden Zubereitungen können grundsätzlich beliebig, d.h. lösungsmittelhaltig oder lösungsmittelfrei ausgestaltet werden. Als Dispergiermedium werden erfindungsgemäß Wasser oder Mischungen aus Wasser und einem mit Wasser mischbaren organischen Lösungsmittel, z. B. einem $C_1$-$C_4$-Alkanol, wie Methanol, Ethanol, n- oder iso-Propanol, n-, iso-, 2- oder tert.-Butanol, Glykol, Propylenglykol, Butylenglykol, Glycerin, Diethylenglykol, Triethylenglykol, Tetrahydrofuran o. ä. verwendet.

Bevorzugt enthalten die erfindungsgemäßen Zubereitungen nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel.

Die Lösungen bzw. Dispersionen der Copolymere P können erfindungsgemäß als solche verwendet werden. Die Zubereitungen enthalten jedoch in der Regel 0,1 bis 30 Gew.-% übliche Hilfsmittel. Ferner enthalten die wässrigen Zubereitungen, sofern die Herstellung der Copolymere P durch radikalische, wässrige Emulsionspolymerisation erfolgt ist, auch die für diesen Zweck eingesetzten, grenzflächenaktiven Substanzen, wie Emulgatoren und/oder Schutzkolloide.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit $C_1$-$C_4$-Alkanolen, z. B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z. B. Texanol® der Eastman Kodak oder deren technische Gemische davon, z. B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oligo)prapylenglykolalkylphenylether, wie sie z. B. als Plastilit® 3060 der BASF AG im Handel erhältlich sind, in Frage.

Ferner können die erfindungsgemäß zur Anwendung kommenden wässrigen Zubereitungen auch anorganische Füllstoffe und/oder Pigmente enthalten. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken enthalten die Zubereitungen häufig farbige Pigmente, beispielsweise Eisenoxide, Ruß oder Graphit. Geeignete Füllstoffe umfassen

Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc.

In einer bevorzugten Ausführungsform der vorliegenden Erfindung werden die wässrigen Zubereitungen in Form eines Klarlacks eingesetzt. Sie enthalten dann in der Regel, bezogen auf ihr Gesamtgewicht, 10 bis 60 Gew.-%, vorzugsweise 40 bis 55 Gew.-% wenigstens eines Copolymers P und 0,1 bis 30 Gew.-%, vorzugsweise 0,5 bis 10 Gew.-% übliche Hilfsmittel, insbesondere Entschäumer und/oder Filmbildehilfsmittel.

In einer anderen Ausführungsform der vorliegenden Erfindung werden die wässrigen Zubereitungen in Form pigment- und/oder füllstoffhaltiger Zubereitungen eingesetzt. In diesem Fall liegt der Gesamtgehalt an Copolymer P in der wässrigen Zubereitung im Bereich von 10 bis 60 Gew.-%, vorzugsweise im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Die vorliegende Erfindung betrifft auch ein Verfahren zum Beschichten mineralischer Formkörper, das dadurch gekennzeichnet ist, dass man eine der hier beschriebenen wässrigen Zubereitungen auf den mineralischen Formkörper aufbringt. In der Regel wird die aufzutragende Menge der wässrigen Zubereitungen im Bereich von 100 bis 700 $g/m^2$ (nass gerechnet) betragen. Dies entspricht einem getrockneten Auftrag von 50 bis 400 $g/m^2$ und insbesondere einem trockenen Auftrag von 100 bis 300 $g/m^2$. Der Auftrag kann in an sich bekannter Weise durch Spritzen, Spachteln, Rakeln, Rollen oder Gießen erfolgen. Die sich in der Regel anschließende Trocknung kann sowohl bei Raumtemperatur als auch bei erhöhter Temperatur, beispielsweise im Bereich von 40 bis 120 °C erfolgen.

In einer üblichen Ausführungsform des erfindungsgemäßen Verfahrens versieht man den mineralischen Formkörper mit wenigstens zwei Beschichtungen. Hierzu bringt man in einem ersten Schritt eine erste wässrige, filmbildenden Zubereitung 1 auf den noch unbehandelten mineralischen Formkörper auf, trocknet gegebenenfalls und bringt dann in einem zweiten Schritt eine weitere wässrige, filmbildende Zubereitung 2 auf den mit der ersten Beschichtung versehenen Formkörper auf. Der erste Schritt als auch der zweite Schritt können wiederholt werden, so dass man auf diesem Wege zu Beschichtungen mit drei oder mehr Schichten gelangen kann.

Erfindungswesentlich ist, dass der filmbildende Bestandteil der wässrigen Zubereitung 2 das zuvor definierte Copolymer P ist. Hingegen kann der filmbildende Bestandteil der ersten wässrigen zubereitung 1 augewählt werden unter den Copolymeren P als auch unter davon verschiedenen Polymeren P'. Letztgenannte sind in der Regel ebenfalls aus ethylenisch ungesättigten Monomeren aufgebaut und liegen in der ersten wässrigen Zubereitung in dispergierter Form vor. Erfindungsgemäß wird das Polymer P' ähnlich dem Copolymer P eine Glasübergangstemperatur im Bereich von -20 bis +80 °C aufweisen. In einer bevorzugten Ausführungsform der vorliegenden Erfindung ist der filmbildende Bestandteil der wässrigen Zubereitung 1 ein von dem Copolymer P verschiedenes Polymer P'.

Als Polymere P' kommen all jene Polymere in Frage, die üblicherweise in wässrigen Zubereitungen für die Beschichtung mineralischer Formkörper enthalten sind. Typische Polymere P' und entsprechende wässrige, filmbildende Zubereitungen, die für die Erstbeschichtung mineralischer Formkörper geeignet sind, werden beispielsweise in der EP-A 469 295 und der DE-A 195 14 266 beschrieben. Auf die Offenbarung dieser Schriften wird hiermit in vollem Umfang Bezug genommen.

Üblicherweise sind die das Polymer P' konstituierenden Monomere M' unter den vorgenannten Monomeren M ausgewählt, wobei wenigstens 30 Gew.-% der Monomere M' von den vorgenannten Estern der Methacrylsäure mit $C_1$-$C_{10}$-Alkanolen verschieden sind oder die Monomere M' mehr als 50 Gew.-% Methylmethacrylat umfassen.

In der Regel werden 65 bis 99,9 Gew.-%, vorzugsweise 90 bis 99,8 Gew.-% und insbesondere 95 bis 99,5 Gew.-% der Monomere M' augewählt sein unter vinylaromatischen Monomeren, insbesondere Styrol und $\alpha$-Methylstyrol, den vorgenannten Estern der Acrylsäure mit $C_1$-$C_{10}$-Alkanolen und den Vinylestern aliphatischer Monocarbonsäuren, wobei bis zu 70 Gew.-% der Monomere M' auch unter den Estern der Methacrylsäure mit $C_1$-$C_{10}$-Alkanolen ausgewählt sein können und/oder wenigstens 50 Gew.-% Methylmethacrylat sind. Diese Monomere werden im Folgenden als Monomere MH' bezeichnet. Ferner umfassen die Monomere M' in der Regel 0,1 bis 35 Gew.-%, vorzugsweise 0,2 bis 90 Gew.-% und insbesondere 0,5 bis 5 Gew.-% von den Monomeren MH' verschiedene Monomere. Hierzu zählen beispielsweise die zuvor genannten Monomere MW, MV, MV' und die Silicium enthaltenden Monomere. Hinsichtlich der Art und der Menge der Monomere MW, MV, MV' und den siliciumorganischen Monomeren gilt das zuvor im Zusammenhang mit dem Copolymeren P gesagte. Insbesondere umfassen die Monomere M' keine oder nur geringe Mengen Monomere MV oder MV'.

Vorzugsweise umfassen die Monomere M' wenigstens zwei verschiedene Monomere MH', im folgenden als Monomere MH1' und MH2' bezeichnet. Die Monomere MH1' sind hierbei vorzugsweise ausgewählt unter Methylmethacrylat, tert.-Butylmethacrylat, tert.-Butylacrylat und vinylaromatischen Verbindungen. Die Monomere MH2' sind vorzugsweise ausgewählt unter den $C_1$-$C_{10}$-Alkylestern der Acrylsäure, und den Estern der Methacrylsäure von n-Alkanolen mit 3 bis 6 C-Atomen. Besonders bevorzugte Monomere MH1' sind Methylmethacrylat und Styrol. Besonders bevorzugte Monomere MH2' sind n-Butylacrylat, 2-Ethylhexylacrylat und n-Butylmethacrylat. Typische Monomerkombinationen MH1'/MH2' sind:

- Styrol: n-Butylacrylat im Gewichtsverhältnis 35:65 bis 80:20,
- Styrol: 2-Ethylhexylacrylat im Gewichtsverhältnis 35:65 bis 80:20,
- Methylmethacrylat: n-Butylacrylat im Gewichtsverhältnis 40:60 bis 80:20,
- Methylmethacrylat: 2-Ethylhexylacrylat im Gewichtsverhältnis 35:65 bis 80:20,
- ferner ternäre und quartäre Monomermischungen MH1'/MH2', bei denen ein Teil des Styrols durch Methylmethacrylat und/oder n-Butylmethacrylat ersetzt ist, oder ein Teil des n-Butylacrylats durch 2-Ethylhexylacrylat, z. B.:

    - Methylmethacrylat : Styrol : 2-Ethylhexylacrylat im Gewichtsverhältnis 20:20:60,
    - n-Butylmethacrylat : Styrol : 2-Ethylhexylacrylat im Gewichtsverhältnis 35:10:55,
    - Methylmethacrylat : n-Butylmethacrylat : n-Butylacrylat im Gewichtsverhältnis 30:35:35
    - Styrol : n-Butylacrylat : 2-Ethylhexylacrylat im Gewichtsverhältnis 50:25:25 und
    - Styrol : Methylmethacrylat : n-Butylacrylat : 2-Ethylhexylacrylat im Gewichtsverhältnis 20:20:30:30.

Die Polymere P' können durch die für die Copolymere P beschriebenen Herstellungsverfahren hergestellt werden, wobei die Herstellung durch radikalische, wässrige Emulsionspolymerisation auch für die Polymere P' bevorzugt ist.

Vorzugsweise werden die wässrigen Dispersionen der Polymere P' als auch der Copolymere P nach ihrer Herstellung durch Zugabe einer Base, z. B. Ammoniak, schwerflüchtigen Aminen, Alkalimetalloder Erdalkalimetallhydroxiden, Erdalkalimetalloxiden neutralisiert. Der pH-Wert der Dispersionen liegt nach der Neutralisation vorzugsweise im Bereich von pH 6 bis pH 9. Bevorzugt ist die Neutralisation mit Ammoniak oder mit Alkalimetallhydroxiden, insbesondere mit Natriumhydroxid. Bei der Neutralisation mit Natriumhydroxid hat es sich als Vorteil erwiesen, wenn der pH-Wert nach der Neutralisation im Bereich von pH 7,0 bis 7,9 liegt.

In einer bevorzugten Ausführungsform der vorliegenden Erfindung enthält die wässrige, filmbildende Zubereitung 1 neben dem Filmbildenden Bestandteil und den üblichen Hilfsmitteln wenigstens einen feinteiligen Füllstoff und/oder ein anorganisches Pigment. Der Gehalt an Copolymer P bzw. Polymer P' liegt in der Zubereitung 1, bezogen auf ihr Gesamtgewicht, im Bereich von 10 bis 60 Gew.-%, vorzugsweise im Bereich von 20 bis 40 Gew.-%. Der Gehalt an Hilfsmitteln liegt in der Regel im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 50 Gew.-%. Die Menge an Pigmenten und/oder Füllstoffen liegt im Allgemeinen zwischen 50 und 450 Gewichtsteilen, bezogen auf 100 Gewichtsteile Copolymer P bzw. Polymer P' in der wässrigen Zubereitung 1. Ferner werden pigmenthaltige Zubereitungen neben den Filmbildehilfsmitteln und den Entschäumern vorzugsweise auch ein Dispergier- bzw. Netzmittel enthalten.

In dieser bevorzugten Ausführungsform kann der Pigmentgehalt der wässrigen Zubereitung 2 gleich dem Pigmentgehalt der wässrigen Zubereitung 1 sein. Vorzugsweise ist er jedoch deutlich geringer d.h. der Unterschied der Pigmentkonzentration beträgt wenigstens 10 Gew.-%. Die Pigmentkonzentration der zweiten Zubereitung ist insbesondere $\leq$ 20 Gew.-% bezogen auf das Gesamtgewicht der Zubereitung 2. Die Zubereitung 2 kann auch frei von Pigmenten verwendet werden. Hierdurch gelangt man zu besonders glänzenden Beschichtungen.

Üblicherweise wird man in dieser Ausführungsform die Zubereitung 1 in einer Menge von 70 bis 300 g/$m^2$ (nass gerechnet) und die Zubereitung 2 in einer Menge von 30 bis 150 g/$m^2$ auf den mineralischen Formkörper aufbringen. Üblicherweise liegt das Gew.-Verhältnis der aufgetragenen Menge von Zubereitung 1 zu Zubereitung 2 im Bereich von 4:1 bis 1:1,5 und insbesondere im Bereich von 3:1 bis 1,2:1.

Das erfindungsgemäße verfahren ist grundsätzlich auf alle Formkörper anwendbar, die ein mineralisches Bindemittel enthalten. Seine bevorzugten Wirkungen entfaltet es bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen, wässrigen Zubereitungen bieten nunmehr den Vorteil, dass sie nicht nur auf den fertig abgebundenen, sondern auch auf den frisch zubereiteten, nicht vollständig abgebundenen "grünen" Betonstein aufgebracht werden können.

Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat der Beschichtungsmasse verfilmt. Nach diesem Prozess wird der Stein vorzugsweise ein zweites Mal nit der erfindungsgemäßen,

wässrigen Zubereitung besprüht. Eine erneute Trocknung erfolgt in einem Tunnelofen bei etwa um 100 °C Liegenden Umlufttemperaturen.

Bereits abgebundene mineralische Formkörper können auch bei üblichen Umgebungstemperaturen, z. B. Raumtemperatur, mit den erfindungsgemäßen Zubereitungen beschichtet werden.

Die vorteilhaften Eigenschaften der erfindungsgemäßen, wässrigen Zubereitungen kommen auch bei mineralischen Formkörpern zum Tragen, die mit einem Zementslurry beschichtet sind. Dieser Zementslurry umfasst in der Regel übliche Pigmente, einen Zement als mineralisches Bindemittel, übliche Hilfsmittel und Wasser in geeigneter Menge und wird auf den mineralischen Formkörper, vorzugsweise einen Betonstein, der noch nicht endgültig abgebunden hat, aufgebracht. Die Zementslurryschicht weist im abgebundenen Zustand eine Schichtdicke im Bereich von 200 µm bis 2 000 µm auf. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die erfindungsgemäß beschichteten mineralischen Formkörper zeichnen sich zum einen dadurch aus, dass ihre Beschichtung eine deutlich höhere Langzeitstabilität bei Freilandbewitterung aufweisen. Insbesondere lässt der Glanz der Beschichtung auch nach mehrjähriger Bewitterung kaum nach. Die Haftung der Beschichtung auf den mineralischen Formkörpern ist sowohl in frischem Zustand als auch nach Bewitterung hoch. Zudem sind die beschichteten Formkörper wirksam vor Ausblühungen geschützt. Diese Eigenschaft ist insbesondere für Betondachsteine von Bedeutung, die daher eine bevorzugte Ausführungsform der Erfindung darstellen. Darüber hinaus sind die Beschichtungen blockfest.

Demnach führt die Verwendung der erfindungsgemäßen, wässrigen Zubereitungen zu einer verbesserten Konservierung der Oberfläche von mineralischen Formkörpern. Die derart beschichteten mineralischen Formkörper sind neu und ebenfalls Gegenstand der vorliegenden Erfindung.

Die im Folgenden angegebenen Beispiele sollen die vorliegande Erfindung verdeutlichen.

Beispiele

I. Herstellung der filmbildenden Copolymere P und Polymere P' in Form wässriger Dispersionen (Dispersionen ED1, VD1 und D2)

1. Herstellungsvorschrift ED1 (erfindungsgemäß)

In einem Polymerisationsgefäß legte man 654,3 g entionisiertes Wasser und 86,7 g Emulgatorlösung 1 vor und erwärmt auf 55 °C.

In einem Zulaufgefäß 1 stellte man eine Emulsion aus:

| | |
|---|---|
| 668,8 g | entionisiertem wasser |
| 23,1 g | Emulgatorlösung 2 |
| 1262,0 g | n-Butylmethacrylat |
| 19,5 g | Acrylsäure |
| 23,4 g | 50 gew.-%ige Lösung von Acrylamid in Wasser |
| 6,5 g | 3-Methacryloyloxypropyltrimethoxysilan her. |

In einem zweiten Zulaufgefäß 2 stellte man eine Lösung von 2,6 g Rongalit® C in 84,4 g Wasser her. In einem dritten Zulaufgefäß stellte man eine Lösung von 2,6 g tert.-Butylhydroperoxid in 91,4 g Wasser her. Dann gab man unter Beibehaltung der 55 °C nacheinander in einer Portion 200 g von Zulauf 1 und je 9 g von Zulauf 2 und 3 in die Vorlage und ließ 12 min reagieren. Anschließend gab man über räumlich getrennte Zuläufe, zeitgleich beginnend, die Restmengen von Zulauf 1 innerhalb 3 h und von Zulauf 2 und 3 innerhalb 3,5 h unter Beibehaltung der 55 °C in das Polymerisationsgefäß. Nach Beendigung von Zulauf 2 ließ man 1 h nachpolymerisieren, kühlte auf 25 °C ab und neutralisierte mit Ammoniak (pH ≈ 9).

Der Feststoffgehalt der erhaltenen Dispersion lag bei 45 Gew.-%. Die mittels DSC ermittelte Glasübergangstemperatur lag bei 44 °C.

Emulgatorlösung 1: 15 gew.-%ige wässrige Lösung des Natriumsalzes eines $C_{12}$-Alkylsulfats

Emulgatorlösung 2: 45 gew.-%ige wässrige Lösung einer als Dowfax® 2A1 (Dow Chemical) im Handel üblichen Wirksubstanz (Gemisch von Monound Bisdodecyl-Verbindung der allgemeinen Formel I als Natriumsalz).

2. Herstellungsvorschrift für VD1 (nicht erfindungsgemäß)

In einem Polymerisationsgefäß legte man 627,6 g entionisiertes Wasser, 69,4 g Emulgatorlösung 3 vor und erwärmt auf 82 °C.

In einem Zulaufgefäß 1 stellte man eine Emulsion aus

| | |
|---|---|
| 605,4 g | entionisiertes Wasser |
| 17,3 | g Emulgatorlösung 3 |
| 1211,7 g | n-Butylmethacrylat |
| 18,2 g | Methacrylsäure |
| 18,3 g | Butandioldiacrylat |
| 60,8 g | 20 gew.-%ige Lösung von Diacetonacrylamid in Wasser |
| 121,2 g | 20 gew.-%ige Lösung von Acrylamid in Wasser her. |

In einem zweiten Zulaufgefäß 2 stellte man eine Lösung von 1,7 g Natriumperoxodisulfat in 68,9 g Wasser her.

Dann gab man unter Beibehaltung der 85 °C nacheinander in einer Portion 100 g von Zulauf 1 und 16,3 g von Zulauf 2 in die Vorlage. Anschließend gab man, über räumlich getrennte Zuläufe zeitgleich beginnend, die Restmengen von Zulauf 1 innerhalb 2,5 h und von Zulauf 2 innerhalb 2,6 h unter Beibehaltung der 85 °C in das Polymerisationsgefäß. Nach Beendigung von Zulauf 2 ließ man 1 h nachpolymerisieren, kühlte auf 60 °C ab, neutralisierte mit Ammoniak (pH ≈ 7,5) und setzte 148 g einer 12 gew.-%igen Lösung von Adipinsäuredihydrazid in Wasser zu, rührte weitere 30 min bei 60 °C und kühlte dann auf Raumtemperatur.

Der Feststoffgehalt der erhaltenen Dispersionen lag bei etwa 45 Gew.-%.

Emulgatorlösung 3: 28 gew.-%ige Lösung des Natriumsalzes eines Fettalkoholethersulfats in Wasser ($C_{12}$-$C_{14}$-Alkyl, 2,5 Ethylenoxideinheiten).

3. Herstellungsvorschrift D1 (Polymer P')

In einem Polymerisationsgefäß legte man 400 g entionisiertes Wasser und 6,22 g Emulgatorlösung 1 vor und erwärmt auf 85 °C.

In einem Zulaufgefäß 1 stellte man eine Emulsion aus

| | |
|---|---|
| 200,0 g | entionisiertem Wasser |
| 37,3 g | Emulgatorlösung 1 |
| 9,3 g | Emulgatorlösung 2 |
| 413,0 g | Methylmethacrylat |
| 287,0 g | n-Butylacrylat |
| 14,0 g | Acrylsäure und |
| 7,0 g | 50 gew.-%ige Lösung von Acrylamid in wasser her. |

In einem zweiten Zulaufgefäß 2 stellte man eine Lösung von 1,4 g Natriumperoxodisulfat in 75 g Wasser her.

Anschließend gab man unter Beibehaltung der 85 °C nacheinander in einer Portion 49 g von Zulauf 1 und 7,6 g von Zulauf 2 in die Vorlage und ließ 30 min reagieren.

Anschließend gab man, über räumlich getrennte Zuläufe zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren, kühlte auf 25 °C ab und neutralisierte mit Natronlauge (pH ≈ 8).

Der Feststoffgehalt der erhaltenen Dispersionen lag bei etwa 49 Gew.-%. Glasübergangstemperatur (DSC) 44°C

Emulgatorlösung 2: 45 gew.-%ige wässrige Lösung einer als Dowfax® 2A1 (Dow Chemical) im Handel üblichen Wirksubstanz (Gemisch von Monound Di-$C_1$-$C_{12}$-alkyl-Verbindung der allgemeinen Formel I als Natriumsalz).

Emulgatorlösung 1: 15 gew.-%ige wässrige Lösung des Natriumsalzes eines $C_{12}$-Alkylsulfats

4. Herstellungsvorschrift D2 (Polymer P')

Die Herstellung von D2 erfolgte analog zur Herstellung von D1 mit dem Unterschied, dass Methylmethacrylat vollständig durch Styrol ersetzte wurde. Feststoffgehalt 49 Gew.-%; Glasübergangstemperatur 42 °C (DSC).

II. Herstellung eines beschichteten mineralischen Formkörpers

Je 100 g der Dispersionen ED1, VD1, D1 und D2 wurden mit 0,5 g eines Entschäumers (Tego Foamex® 825 der Th. Goldschmidt AG) und 5 g eines technischen Gemisches der Di-n-butylester der Bernstein-, Glutar- und Adipinsäure versetzt.

Aus den so konfektionierten Dispersionen wurden Dispersionsfarben formuliert. Zu diesem Zweck suspendierte man 253 g eines handelsüblichen Füllstoffs (Calciumcarbonat/Calciumsilikat) und 38,8 g Eisenoxid-Rotpigment der BAYER AG in 112 g Wasser. Hierzu gab man unter Rühren 598 g der konfektionierten Dispersionen D1. Hierbei wurde eine Farbe F1 mit einer PVK (Pigmentvolumenkonzentration) von 27 erhalten.

Analog stellte man aus der konfektionierten Dispersion D2 eine Farbe F2 mit einer PVK von 40 her (372 g Füllstoff, 57 g Eisenoxid-Rotpigment, 164 g Wasser und 408 g Dispersion D2).

Analog stellte man aus der konfektionierten Dispersion ED1 eine Farbe EF1 und aus der konfektionierten Dispersion VD1 eine Farbe VF2, jeweils mit einer PVK von 10 her (104 g Füllstoff, 16 g Pigment, 46 g Wasser und 835 g Dispersion).

Die so erhaltenen Farben F1, F2, EF1 und VF1 ließ man vor ihrer anwendungstechnischen Prüfung 48 h bei Raumtemperatur reifen. Anschließend wurde die Farbe mittels einer Spritzpistole auf einen "grünen" Betonstein*) aufgebracht (Auftrag etwa 320 g/m$^2$, bezogen auf den Farbauftrag; sog. Nassauftrag). Anschließend trocknet man 2 h bei 40 °C und 75 % rel. Luftfeuchte und dann 4 h bei 40 °C und 95 % rel. Luftfeuchte. Danach brachte man in der gleichen Weise eine zweite Beschichtung aus den konfektionierten Dispersionen ED1 bzw. VD1 oder aus den Farben EF1 bzw. VF1 auf (etwa 160 g/m$^2$, bezogen auf die Farbe) und trocknete 8 h bei 40 °C und 50 % rel. Luftfeuchte (sog. Trockenauftrag).

III.Prüfung der anwendungstechnischen Eigenschaften

1) Bestimmung des Schutzes von mineralischen Formkörpern vor Ausblühungen

Hierzu wurde ein nach II hergestellter Stein 7 d mit dem Gesicht auf ein 60 °C warmes Wasserbad gelegt. Der Grad der Ausblühungen wurde visuell beurteilt. Hierfür wird folgende Notenskala zugrunde gelegt. Die Ergebnisse sind in Tabelle 1 zusammengefasst.

0 = keine Ausblühungen
1 = fast keine Ausblühungen
2 = leichte Ausblühungen
3 = mäßige Ausblühungen
4 = starke Ausblühungen
5 = sehr starke Ausblühungen

2) Bestimmung des Glanzes eines Betonsteins bei simulierter Feuchtbewitterung.

Ein nach II hergestellter Betonstein wurde wie unter III 1) beschrieben 7d mit wasserdampf behandelt. Anschließend wurde der Glanz der Beschichtung in den Bereichen, die dem Wasserdampf ausgesetzt waren, visuell beurteilt. Die Ergebnisse sind in Tabelle 1 zusammengefasst. Es wurde folgende Notenskala zugrundegelegt:

0 = sehr hoher Glanz
1 = hoher Glanz
2 = mäßiger Glanz
3 = geringer Glanz
4 = schwacher Glanz bis matt

*) Als "grüner" Betonstein diente ein gewölbter Stein mit Grundfläche von 30 x 20 cm und einer Stärke von 1,8 cm der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde. Der Scheitelpunkt der Wölbung lag etwa 4 cm oberhalb der Grundfläche.

5 = matt, stumpf

3) Bestimmung des Glanzes eines Betonsteins bei Freilandbewitterung.

Ein nach II hergestellter Betonstein wurde auf einem Freibewitterungsstand bei Ludwigshafen a. Rh, Rheinland-Pfalz mit einer Neigung von 45° aufgestellt, wobei die beschichtete Seite nach Süden zeigte. Nach drei Jahren wurde der Glanz der Beschichtung visuell beurteilt. Die Ergebnisse sind in Tabelle 1 zusammengefasst. Es wurde folgende Notenskala zugrundegelegt:

0 = sehr hoher Glanz
1 = hoher Glanz
2 = mäßiger Glanz
3 = geringer Glanz
4 = schwacher Glanz bis matt
5 = matt, stumpf

4) Bestimmung der Haftung der Beschichtung bei simulierter Feuchtbewitterung.

Ein nach II hergestellter Betonstein wurde wie unter III 1) beschrieben 7d mit Wasserdampf behandelt. Anschließend wurde die Haftung der Beschichtung in den Bereichen, die dem wasserdampf ausgesetzt waren, beurteilt. Hierzu wurde ein 10 cm langer und 3 cm breiter Streifen eines Klebebands (TESA™ der Fa. Beiersdorf AG) mit einer Gummirolle unter leichtem Druck auf die Beschichtung aufgebracht. Nach etwa 2 Min. wurde der Klebestreifen ruckartig entfernt. Die Menge der am Klebeband haftenden Bestandteile wurde visuell bewertet. Die Ergebnisse sind in Tabelle 1 zusammengefasst. Es wurde folgende Notenskala zugrunde gelegt:

0 = nicht vorhanden
1 = schwach erkennbar
2 = erkennbar
3 = auffallend
4 = stark auffallend
5 = sehr stark auffallend

Tabelle 1

| Beispiel | Erstbeschichtung | | Zweitbeschichtung | | Ausblühen | Glanz Feuchtbewitterung | Glanz Freibewitterung | Haftung |
|---|---|---|---|---|---|---|---|---|
| | Farbe | PVK[2] | Zubereitung | PVK[2] | | | | |
| V1[1] | F2 | 44 | VF1 | 10 | 2 | 3 | 5 | 2 |
| V2 | F2 | 44 | VD1 | 0 | 2 | 1 | 5 | 2 |
| 1 | F2 | 44 | EF1 | 10 | 2 | 3 | 3 | 2 |
| 2 | F2 | 44 | ED1 | 0 | 2 | 1 | 3 | 2 |
| V3 | F1 | 27 | VF1 | 10 | 2 | 3 | 5 | 2 |
| V4 | F1 | 27 | VD1 | 0 | 2 | 1 | 5 | 2 |
| 3 | F1 | 27 | EF1 | 10 | 2 | 3 | 3 | 2 |
| 4 | F1 | 27 | ED1 | 0 | 2 | 1 | 3 | 2 |

1) V = Vergleichsbeispiel

2) PVK = Pigmentvolumenkonzentration =
(volumen Pigment + Füllstoff)/(Volumen Pigment + Füllstoff + Bindemittel) x 100

**Patentansprüche**

1. Verwendung von wässrigen, filmbildenden Zubereitungen, die ein Copolymer P als alleinigen filmbildenden Bestandteil enthalten, das in der Zubereitung in dispers verteilter Form vorliegt und aus ethylenisch ungesättigten Monomeren M aufgebaut ist, wobei die Monomere M

   i. 70 bis 99,9 Gew.-% wenigstens eines Estes der Methacrylsäure mit einem $C_2$-$C_{10}$-Alkanol,

   ii. 0,1 bis 30 Gew.-% wenigstens eines davon verschiedenen monoethylenisch ungesättigten Monomers, ausgenommen Methylmethacrylat, umfassen und

   höchstens 1 Gew.-% der Monomere M zwei oder mehrere ethylenisch ungesättigte Doppelbindungen aufweisen, zur Beschichtung mineralischer Formkörper.

2. Verwendung nach Anspruch 1, wobei die Ester der Methacrylsäure ausgewählt sind unter den Estern von n-Alkanolen mit 2 bis 6 C-Atomen.

3. Verwendung nach einem der vorhergehenden Ansprüche, wobei die von den Estern der Methacrylsäure verschiedenen Monomere 0,1 bis 10 Gew.-%, bezogen auf das Gesamtgewicht der Monomere M, wenigstens eines monoethylenisch ungesättigten Monomers mit einer Wasserlöslichkeit $\geq$ 60 g/l (bei 25 °C und 1 bar) umfassen.

4. Verwendung nach einem der vorhergehenden Ansprüche, wobei die von den Estern der Methacrylsäure verschiedenen Monomere 0,05 bis 2,0 Gew.-%, bezogen auf das Gesamtgewicht der Monomere M, wenigstens eines monoethylenisch ungesättigten, Silicium enthaltenden Monomers umfassen.

5. Verwendung nach einem der vorhergehenden Ansprüche, wobe das Copolymer P eine Glasübergangstemperatur $T_G$ im Bereich von -10 bis +50 °C aufweist.

6. Verwendung nach einem der vorhergehenden Ansprüche, wobei die filmbildende, wässrige Zubereitung, bezogen auf ihr Gesamtgewicht,

   i. 10 bis 60 Gew.-% wenigstens eines Copolymers P und
   ii. 0,1 bis 20 Gew.-% übliche Hilfsmittel enthält.

7. Verfahren zur Beschichtung mineralischer Formkörper, **dadurch gekennzeichnet, dass** man wenigstens eine wässrige, filmbildende Zubereitung, wie in einem der Ansprüche 1 bis 6 definiert, auf den mineralischen Formkörper aufbringt.

8. Verfahren gemäß Anspruch 7 **dadurch gekennzeichnet, dass** man einen unbehandelten mineralischen Formkörper mit wenigstens einer ersten Beschichtung versieht, indem man wenigstens eine erste wässrige, filmbildende Zubereitung, die wenigstens ein Copolymer P oder ein davon verschiedenes Polymer P' enthält, wobei das Polymer P' aus ethylenisch ungesättigten Monomeren M aufgebaut ist und eine Glasübergangstemperatur im Bereich von -20 bis +80 °C aufweist, auf den mineralischen Formkörper aufbringt und anschließend trocknet, diesen Vorgang gegebenenfalls wiederholt und anschließend wenigstens eine weitere wässrige, filmbildende Zubereitung, wie in einem der Ansprüche 1 bis 6 definiert, auf den mit der ersten Schicht versehenen mineralischen Formkörper aufbringt.

9. Verfahren nach Anspruch 8, wobei die erste wässrige, filmbildende Zubereitung, bezogen auf ihr Gesamtgewicht,

   i. 10 bis 60 Gew.-% wenigstens eines Polymers P',
   ii. 0,1 bis 20 Gew.-% übliche Hilfsmittel und
   iii. 10 bis 60 Gew.-% wenigstens eines feinteiligen Füllstoffs und/oder eines anorganischen Pigments enthält.

10. Mineralische Formkörper erhältlich nach einem der Ansprüche 1 bis 9.

## Claims

1. The use of aqueous film-forming formulations comprising as sole film-forming constituent a copolymer P which is present in disperse form in the formulation and is composed of ethylenically unsaturated monomers M, the monomers M comprising

   i. from 70 to 99.9% by weight of at least one ester of methacrylic acid with a $C_2$-$C_{10}$-alkanol and

   ii. from 0.1 to 30% by weight of at least one monoethylenically unsaturated monomer different therefrom, except methyl methacrylate,

   not more than 1% by weight of the monomers M having two or more ethylenically unsaturated double bonds, for coating mineral moldings.

2. The use as claimed in claim 1, where the esters of methacrylic acid are selected from the esters with n-alkanols having 2 to 6 carbon atoms.

3. The use as claimed in either of the preceding claims, where the monomers other than the esters of methacrylic acid comprise from 0.1 to 10% by weight, based on the overall weight of the monomers M, of at least one monoethylenically unsaturated monomer having a water solubility ≥ 60 g/l (at 25°C and 1 bar).

4. The use as claimed in any of the preceding claims, where the monomers other than the esters of methacrylic acid comprise from 0.05 to 2.0% by weight, based on the overall weight of the monomers M, of at least one monoethylenically unsaturated, silicon-containing monomer.

5. The use as claimed in any of the preceding claims, where the copolymer P has a glass transition temperature $T_G$ in the range from -10 to +50°C.

6. The use as claimed in any of the preceding claims, where the film-forming aqueous formulation comprises, based on its overall weight,

   i. from 10 to 60% by weight of at least one copolymer P and
   ii. from 0.1 to 20% by weight of customary auxiliaries.

7. A method of coating a mineral molding, which comprises applying to said mineral molding at least one aqueous film-forming formulation as defined in any of claims 1 to 6.

8. The method as claimed in claim 7, wherein an untreated mineral molding is provided with at least one first coating by applying to said mineral molding at least one first aqueous film-forming formulation which comprises at least one copolymer P or a polymer P' which is different therefrom, is composed of ethylenically unsaturated monomers M and has a glass transition temperature in the range from -20 to +80°C and then drying this coating, repeating this procedure if desired and then applying at least one further aqueous film-forming formulation as defined in any of claims 1 to 6 to the mineral molding that has been provided with the first coat.

9. The method as claimed in claim 8, where the first aqueous film-forming formulation comprises, based on its overall weight,

   i. from 10 to 60% by weight of at least one polymer P',
   ii. from 0.1 to 20% by weight of customary auxiliaries and
   iii. from 10 to 60% by weight of at least one finely divided filler and/or an inorganic pigment.

10. A mineral molding obtainable as claimed in any of claims 1 to 9.

## Revendications

1. Utilisation de préparations aqueuses filmogènes qui contiennent, en tant qu'unique composant filmogène, un copolymère P, qui est présent dans la préparation sous forme dispersée et qui est composé de monomères M à

insaturation éthylénique, les monomères M comprenant

i. 70% à 99,9% en poids d'au moins un ester de l'acide méthacrylique avec un alcanol en $C_2$ à $C_{10}$,
ii. 0,1% à 30% en poids d'un monomère à insaturation monoéthylénique différent de celui-ci, à l'exception du méthacrylate de méthyle, et

au maximum 1% en poids des monomères M présentant deux doubles liaisons à insaturation éthylénique ou plus, pour le revêtement de corps moulés minéraux.

**2.** Utilisation selon la revendication 1, où les esters de l'acide méthacrylique sont choisis parmi les esters de n-alcanols possédant 2 à 6 atomes de C.

**3.** Utilisation selon l'une quelconque des revendications précédentes, où les monomères différents des esters de l'acide méthacrylique comprennent 0,1% à 10% en poids, par rapport au poids total des monomères M, d'au moins un monomère à insaturation monoéthylénique présentant une hydrosolubilité supérieure ou égale à 60 g/L (à 25°C et sous une pression de 1 bar).

**4.** Utilisation selon l'une quelconque des revendications précédentes, où les monomères différents des esters de l'acide méthacrylique comprennent 0,05% à 2% en poids, par rapport au poids total des monomères M, d'au moins un monomère à insaturation monoéthylénique contenant du silicium.

**5.** Utilisation selon l'une quelconque des revendications précédentes, où le copolymère P présente une température de transition vitreuse $T_G$ allant de -10°C à +50°C.

**6.** Utilisation selon l'une quelconque des revendications précédentes, où la préparation aqueuse filmogène contient, par rapport à son poids total,

i. 10% à 60% en poids d'au moins un copolymère P et
ii. 0,1% à 20% en poids d'adjuvants habituels.

**7.** Procédé pour le revêtement de corps moulés minéraux, **caractérisé en ce que** l'on dépose au moins une préparation aqueuse filmogène, telle que définie dans l'une quelconque des revendications 1 à 6, sur le corps moulé minéral.

**8.** Procédé selon la revendication 7, **caractérisé en ce que** l'on pourvoit un corps moulé minéral non traité avec au moins un premier revêtement en déposant au moins une première préparation filmogène aqueuse, qui contient au moins un copolymère P ou un polymère P' différent de celui-ci, le polymère P' étant composé de monomères M à insaturation éthylénique et présentant une température de transition vitreuse allant de -20°C à +80°C, sur le corps moulé minéral puis en la séchant, en répétant éventuellement ce procédé et en déposant ensuite au moins une autre préparation filmogène aqueuse, telle que définie dans l'une quelconque des revendications 1 à 6, sur le corps moulé minéral pourvu de la première couche.

**9.** Procédé selon la revendication 8, où la première préparation filmogène aqueuse contient, par rapport à son poids total,

i. 10% à 60% en poids d'au moins un polymère P',
ii. 0,1% à 20% en poids d'adjuvants habituels,
iii. 10% à 60% en poids d'au moins une charge finement divisée et/ou d'un pigment inorganique.

**10.** Corps moulé minéral pouvant être obtenu selon l'une quelconque des revendications 1 à 9.